# EUROPÄISCHE PATENTSCHRIFT

(11) **EP 0 841 144 B1**
(45) Veröffentlichungstag und Bekanntmachung des Hinweises auf die Patenterteilung: **02.01.2002**
(21) Anmeldenummer: 97118308.2
(22) Anmeldetag: 22.10.1997
(51) Int. Cl.: B29C 47/10, B29C 47/58

(54) **Extrusionsanlage mit minimierten Farbwechselzeiten**
Extruder with quick colour change
Extrudeuse avec changement de couleur rapide

(30) Priorität: 07.11.1996 DE 19646394
(43) Veröffentlichungstag der Anmeldung: 13.05.1998
(73) Patentinhaber: Röhm GmbH & Co. KG, 64293 Darmstadt (DE)
(72) Erfinder: Meier-Kaiser, Michael, Dr., 64665 Alsbach-Hähnlein (DE)

(56) Entgegenhaltungen:
- CH-A- 682 647
- DE-A- 3 735 279
- GB-A- 2 090 559
- GB-A- 2 216 844
- US-A- 5 468 586
- PATENT ABSTRACTS OF JAPAN vol. 017, no. 623 (M-1511), 17.November 1993 & JP 05 192982 A (SUMITOMO ELECTRIC IND LTD), 3.August 1993,
- PATENT ABSTRACTS OF JAPAN vol. 017, no. 053 (M-1361), 3.Februar 1993 & JP 04 265728 A (JAPAN STEEL WORKS LTD:THE), 21.September 1992,
- PATENT ABSTRACTS OF JAPAN vol. 017, no. 008 (M-1350), 7.Januar 1993 & JP 04 239623 A (JAPAN STEEL WORKS LTD:THE), 27.August 1992,

## Beschreibung

Die Erfindung betrifft eine Extrusionsanlage und ein Verfahren zur Minimierung von Farbwechselzeiten bei der Extrusion von thermoplastischen Kunststoffen.

### Stand der Technik

Die übliche Vorgehensweise bei der Herstellung von gefärbten Extrudaten ist die Versorgung des Extruders mit einer Mischung nicht eingefärbter Basisformmasse und einem Masterbatch, das den Farbstoff in hoher Konzentration enthält.

Die Mischung kann sowohl off-line batchweise in einem separaten Mischer oder in-line durch parallele Dosierung der beiden Komponenten in den Extrudertrichter erfolgen.

Bei einem Farbwechsel wird in der Regel zunächst kein Masterbatch mehr zudosiert, bis die Anlage durchgewaschen ist. Gegebenenfalls kann auch ein Zylinderreinigungsmittel, eine hochviskose Formmasse, zur Reinigung durchgesetzt werden. Dann erst wird ein anders gefärbtes Masterbatch eingesetzt. Der Farbwechsel ist dann abgeschlossen, wenn das neue Extrudat gleichmäßig die neue Farbe aufweist. Die während des Farbwechsels hergestellten Extrudate sind in der Regel nicht verkaufsfähig.

GB-A 2 090 559 beschreibt eine Exruderanlage bestehend aus einem Haupt-und einem Beispritzextruder, wobei der Hauptextruder hinter der Einmündungsstelle ein Mischteil aufweist. Die Anlage dient zur Herstellung von vernetzten Kunststoffen, indem über den Beispritzextruder unvernetzter Kunststoffschmelze, z. B. Polyethylen, ein vernetzendes Agens zugegeben wird und im Mischteil des Hauptextruders eingemischt wird.

US-A 5 468 586 beschreibt eine Extruderanlage, in der ein flüssiges Färbemittel zu einer Kunststoffschmelze zudosiert werden kann, wobei die resultierende Farbtönung gemessen und mittels eines Regelkreises im gewünschten Bereich gehalten werden kann.

### Aufgabe und Lösung

Die Aufgabe der vorliegenden Erfindung ist es eine Vorrichtung und ein Verfahren bereitzustellen, das es ermöglicht die Farbwechselzeiten bei der Extrusion farbiger Kunststoffe zu verkürzen.

### Die Aufgabe wurde gelöst durch eine

Extrusionsanlage bestehend aus einem Hauptextruder (1) und einem Beispritzextruder (2), wobei der Hauptextruder (1) hinter der Einmündungsstelle (4) des Beispritzextruders (2) ein Mischteil (5) aufweist, dadurch gekennzeichnet, daß beide Extruder über ein Dreiwegeventil (3) verbunden sind.

Die erfindungsgemäße Extrusionsanlage ermöglicht deutlich schnellere Farbwechsel als herkömmliche Anlagen bei denen nur ein Extruder verwendet wird. Während bei einer herkömmlichen Anlage das gesamte Volumen des Extruders von der gefärbten Kunststoffschmelze gereinigt werden muß, ist dies bei der erfindungsgemäßen Extrusionsanlage beim Hauptextruder (1) nur noch ab dem Mischteil (5) notwendig, da erst hier die nicht gefärbte Schmelze B (Schmelze der Basisformmasse B) und die gefärbte Schmelze M (Schmelze der Masterbatchformmasse M) zusammentreffen. Das bedeutet, daß ein vergleichsweise kleineres Volumen zu reinigen ist, was natürlich in kürzerer Zeit möglich ist. Zusätzlich muß der Beispritzextruder (2) gereinigt werden.

Der Beispritzextruder (2) besitzt im Vergleich zum Hauptextruder (1) ein relativ kleines Volumen, so daß die konzentriert gefärbte Schmelze M effektiv in kurzer Zeit ausgetragen werden kann. Die Reinigung des Hauptextruders (1) und des Beispritzextruders (2) erfolgt zudem gleichzeitig, wodurch sich die Reinigungszeit insgesamt nochmals verkürzt.

Das Dreiwegeventil ermöglicht jeweils die Kopplung oder Entkopplung des Hauptextruders (1) und des Beispritzextruders (2). In Stellung (II) kann die Strecke zwischen der Einmündungsstelle (4) und dem Dreiwegeventil (3), als auch das Dreiwegeventil (3) selbst gereinigt werden.

Die Erfindung wird durch die nachstehenden Figuren erläutert, ist aber nicht auf die dargestellten Ausführungsformen beschränkt.

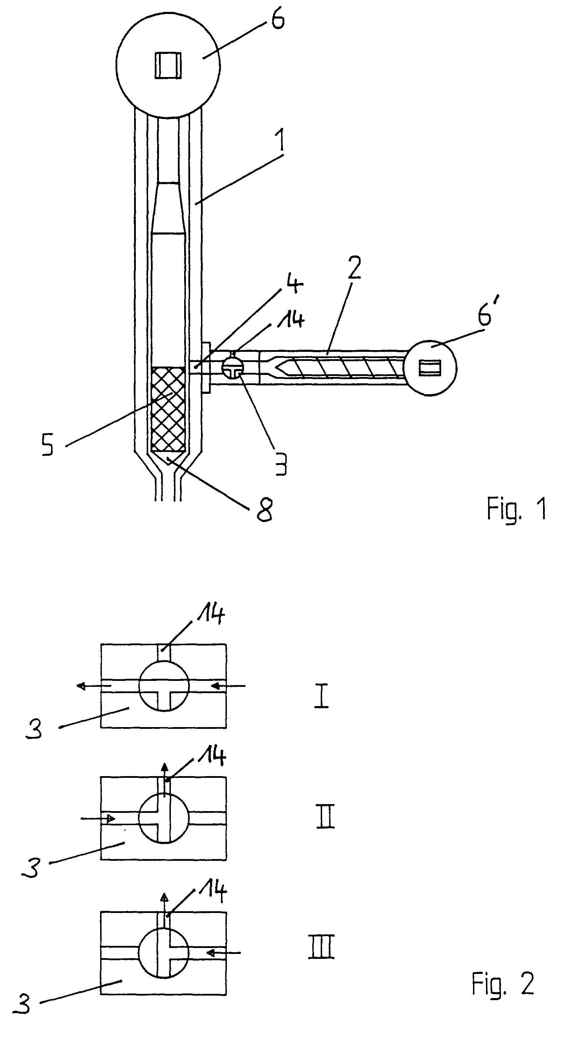

Fig. 1. Erfindungsgemäße Extrusionsanlage in der Aufsicht.
Fig. 2: Die Stellungen (I), (II), und (III) des Dreiwegeventils (3) zwischen dem Hauptextruder (1) und dem Beispritzextruder (2). Die Pfeile stehen für die Fließrichtung der Schmelze.
Fig. 3: Teilweiser Längsschnitt durch den Hauptextruder (1) mit in-line Farbmessungsvorrichtung im Fließkanal (7)
Fig. 4: Querschnitt durch den Fließkanal des Hauptextruders (1) mit in-line Farbmessungvorrichtung und in der Mitte verjüngtem Fließkanal (7). Die Dicke der Meßstrecke zwischen den Glaseinsätzen (9) wird durch Doppelpfeil symbolisiert.

### Bezugszeichenliste:

- 1 =: Hauptextruder
- 2 =: Beispritzextruder
- 3 =: Dreiwegeventil
- 4 =: Einmündungsstelle
- 5 =: Mischteil
- 6 =: Trichter des Hauptextruders
- 6'=: Trichter des Beispritzextruders
- 7 =: Fließkanal
- 8 =: Schneckenspitze
- 9 =: Glaseinsatz
- 10 =: Lichtquelle
- 11 =: Sensor
- 12 =: Anpreßrahmen
- 13 =: Dichtungspapier
- 14 =: Schmelzeauslauf
- 15 =: Fließrichtung der Schmelze

### Ausführung der Erfindung

Die erfindungsgemäße Extrusionsanlage besteht aus einem Hauptextruder (1) und einem Beispritzextruder (2). Der Beispritzextruder (2) hat ein kleineres Volumen als der Hauptextruder (1), bevorzugt ein um den Faktor 3 - 10 kleineres Volumen. Der Beispritzextruder (2) mündet erst im hinteren Bereich des Hauptextruders (1), bevorzugt hinter dem zweiten Drittel bis dritten Viertel bezogen auf die Länge des Hauptextruders (1) über eine Einmündungsstelle (4), die vor einem Mischteil (5) liegt, in diesen. Zwischen der Einmündungsstelle (4) und dem Beispritzextruder (2) befindet sich ein Dreiwegeventil (3). Die Eindosierung von Formmassengranulat in den Hauptextruder (1) bzw. in den Beispritzextruder (2) kann über die Trichter (6) bzw. (6') oder andere geeignete Zugabevorichtungen erfolgen.

In der Stellung (I) stellt das Dreiwegeventil (3) die Verbindung zwischen dem Hauptextruder (1) und dem Beispritzextruder (2) her.

In der Stellung (II) ist der Beispritzextruder (2) abgekoppelt, es kann jedoch Schmelze aus dem Hauptextruder (1) durch den Schmelzeauslauf (14) des Dreiwegeventils (3) austreten.

In der Stellung (III) ist der Hauptextruder (1) abgekoppelt, es kann jedoch Schmelze aus dem Beispritzextruder (2) durch den Schmelzeauslauf (14) des Dreiwegeventils (3) austreten.

Im Hauptextruder (1) wird die nicht eingefärbte Basisformmasse B über den Trichter (6) zugegeben und geschmolzen (Schmelze B). Über den Beispritzextruder (2) wird die konzentriert gefärbte Masterbatchformmasse M durch den Trichter (6') zugegeben, geschmolzen (Schmelze M) und durch das Dreiwegeventil (3), das sich in Stellung (I) befindet, in den Hauptextruder (1) eindosiert. Beide Schmelzen werden im Mischteil (5), das hinter der Einmündungsstelle (4) des Beispritzextruders (2) angeordnet ist, gemischt. In der Regel ist hinter dem Hauptextruder (1) ein Formwerkzeug, z. B. eine Breitschlitzdüse, angebracht, aus dem die farbige Schmelze, z. B. als Kunststoffbahn für Platten oder Folien, austritt.

Ein Verfahren zum beschleunigten Wechsel verschieden gefärbter Formmassen auf der erfindungsgemäßen Extrusionsanlage kann so ablaufen, daß nach der Extrusion einer ersten gefärbten Formmasse F1, aus einer durch den Hauptextruder (1) durchgesetzten, nicht eingefärbten Basisformmasse B und einer in Stellung (I) des Dreiwegeventils (3) über den Beispritzextruder (2) zugemischten, konzentriert eingefärbten Masterbatchformmasse M1, die nicht gefärbte Basisformmasse B nacheinander in den Stellungen (II) und (III) des Dreiwegeventils (3) durch den Hauptextruder (1) und den Beispritzextruder (2) durchgesetzt wird, wodurch die Masterbatchformmasse M1 aus der Wegstrecke zwischen dem Hauptextruder und dem Dreiwegeventil (3), aus dem Beispritzextruder (2) und aus dem Dreiwegeventil (3) ausgetragen wird. Anschließend kann mit der Extrusion einer zweiten gefärbten Formmasse F2, aus der durch den Hauptextruder (1) durchgesetzten, nicht eingefärbten Basisformmasse B und einer weiteren, über den Beispritzextruder (2) in Stellung (I) des Dreiwegeventils zugemischten, konzentriert eingefärbten Masterbatchformmasse M2, begonnen werden.

Die Masterbatchformmassen M 1 und M2 sind in der Regel verschieden eingefärbt, da ihre Zumischung zu der nicht eingefärbten Basisformmasse B die angestrebte Einfärbung der Formmassen F1 bzw. F2 bewirkt, deren Extrusion der eigentiche Produktionszweck ist.

Bei einem Farbwechsel kann demnach wie folgt vorgegangen werden. Der Beispritzextruder (2) wird angehalten. Das Dreiwegeventil (3) wird in Stellung (II) gebracht. Mit der farblosen Schmelze B aus dem Hauptextruder (1) wird die Strecke von der Einmündungsstelle (4) bis zum Dreiwegeventil (3) und das Dreiwegeventil (3) selbst durchströmt bis keine Einfärbung der aus dem Schmelzeauslauf (14) austretenden Schmelze mehr sichtbar ist. Die aus dem Dreiwegeventil (3) austretende Schmelze kann z. B. in einem Behälter aufgefangen werden. Gleichzeitig reinigt sich auch der Hauptextruder (1), indem die farblose Schmelze B die Reste der eingefärbten Formmasse aus dem Mischteil (5) durch den Fließkanal (7) und eine gegebenenfalls vorhandene Extrusionsdüse in Extrusionsrichtung austrägt.

Das Dreiwegeventil wird nun in Stellung (III) gebracht. Die gefärbte Schmelze M wird aus dem Beispritzextruder (2) ausgewaschen. Dies geschieht vorzugsweise durch Zudosierung von Basisformmasse B, solange bis die aus dem Schmelzeauslauf (14) des Dreiwegeventils (3) austretende Schmelze keine Färbung mehr zeigt. Nun kann eine neue, anders gefärbte Masterbatchformasse M' durchgesetzt werden bis die ungefärbte Schmelze B aus dem Beispritzextruder (2) durch den Schmelzeauslauf (14) des Dreiwegeventils (3) ausgetragen ist.

Das Dreiwegeventil kann nun wieder in Stellung (I) verbracht werden und es kann mit der Extrusion des anders eingefärbten Kunststoffs aus Basisformmasse B und einer neuen Masterbatchformmasse M begonnen werden.

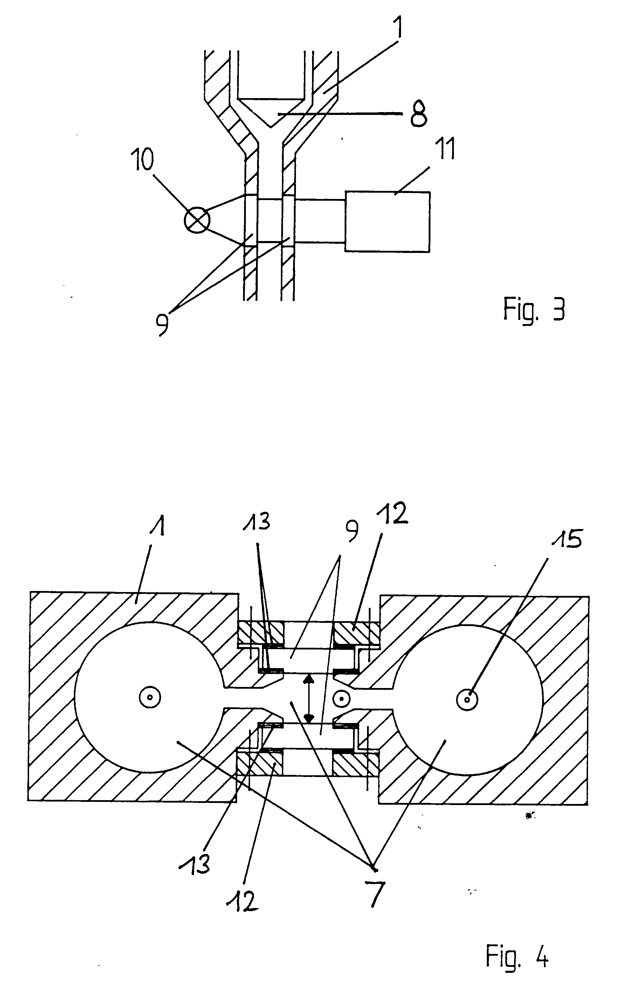

In einer bevorzugten Ausführungsform (siehe Fig. 3 und 4) ist der Hauptextruder (1) mit im Fließkanal (7) hinter der Schneckenspitze (8) befindlichen, gegenüberliegenden Glaseinsätzen (9) versehen, die eine on-line Farbmessung gestatten. Die Glaseinsätze können zweckmäßigerweise mit einem Anpreßrahmen (12) versehen sein und mittels Dichtungspapier (13) abgedichtet sein. Auf einer Seite ist eine Lichtquelle (10) und auf der anderen Seite ein Sensor (11) zur Registrierung der Farbe bzw. der Intensität der Einfärbung angebracht. Dem Fachmann sind geeignete Meßeinrichtungen bekannt, wie z. B. Spektralphotometer oder Dreibereichsmeßgeräte.

Anhand der bei der in-line Farbmessung erhaltenen Ist-Werte kann bei einer Abweichung von vorgegebenen Soll-Werten über einen Regelkreis z. B. die Zugabemenge der Schmelze M aus dem Beispritzextruder (2), vorzugsweise durch Regelung der Schneckendrehzahl, reguliert werden, so daß die Einfärbung innerhalb enger Grenzen konstant gehalten werden kann.

Um die Dicke der zu messenden Schmelzeschicht gegebenenfalls zu reduzieren, kann der Fließkanal (7) auch an der Meßstelle verjüngt sein, wobei die Hauptmenge der Schmelze durch rohrartige Kanäle fließt (siehe Fig. 4). Dies ermöglicht bzw. erleichtert die Messung sehr intensiver Einfärbungen. Der vorgeschlagene Fließkanalaufbau im Meßbereich vereint die Vorteile:
- kurze Meßstrecke
- niedriger Druckverbrauch
- gute Selbstreinigung

Bei der Messung der Farbe der Schmelze muß beachtet werden, daß die üblicherweise für die Einfärbung von Kunststoffen verwendeten Pigmente eine temperaturabhängige Farbe haben können. Durch Farbmessungen bei verschiedenen Temperaturen können jedoch entsprechende Korrekturfaktoren ermittelt werden.

Die in-line Farbmessung und die Steuerung der Zugabemenge der Schmelze M ermöglicht es auch teilweise und ungleichmäßig eingefärbtes Material, das beim Durchspülen der Extruder angefallen war, wieder einzuarbeiten. Dies kann geschehen indem dieses Material zunächst gemahlen wird und dann in langsam steigenden Mengen der ungefärbten Basisformmasse im Trichter (6) des Hauptextruders (1) zugesetzt wird. Die Mengenänderungen dürfen dabei nur so hoch sein, daß die Einfärbung innerhalb der vorgegebenen Toleranzen gehalten wird.

## Patentansprüche

1. Extrusionsanlage bestehend aus einem Hauptextruder (1) und einem Beispritzextruder (2), wobei der Hauptextruder (1) nach der Einmündungsstelle (4) des Beispritzextruders (2) ein Mischteil (5) aufweist, **dadurch gekennzeichnet, daß** beide Extruder über ein Dreiwegeventil (3) verbunden sind.

2. Extrusionsanlage gemäß Anspruch 1, **dadurch gekennzeichnet, daß** der Beispritzextruder (2) ein 3 bis 10-fach kleineres Volumen als der Hauptextruder (1) aufweist.

3. Extrusionsanlage nach Anspruch 1 oder 2, **dadurch gekennzeichnet, daß** sie mit einer In-line Farbmessungsvorrichtung ausgestattet ist.

4. Extrusionsanlage nach Anspruch 3, **dadurch gekennzeichnet, daß** die in-line Farbmessungsvorrichtung an einer verjüngten Stelle des Fließkanals (7) angebracht ist.

5. Verfahren zum Wechsel verschieden gefärbter Formmassen auf einer Extrusionsanlage gemäß Anspruch 1, wobei nach der Extrusion einer ersten gefärbten Formmasse F1 aus einer durch den Hauptextruder (1) durchgesetzten, nicht eingefärbten Basisformmasse B und einer in Stellung (I) des Dreiwegeventils (3) über den Beispritzextruder (2) zugemischten, konzentriert eingefärbten Masterbatchformmasse M1 die nicht gefärbte Basisformmasse B nacheinander in den Stellungen (II) und (III) des Dreiwegeventils (3) durch den Hauptextruder (1) und den Beispritzextruder (2) durchgesetzt wird, wodurch die Masterbatchformmasse M1 aus der Wegstrecke zwischen dem Hauptextruder und dem Dreiwegeventil (3), aus dem Beispritzextruder (2) und aus dem Dreiwegeventil (3) ausgetragen wird und anschließend die Extrusion einer zweiten gefärbten Formmasse F2 aus der durch den Hauptextruder (1) durchgesetzten, nicht eingefärbten Basisformmasse B und einer über den Beispritzextruder (2) in Stellung (I) des Dreiwegeventils (3) zugemischten, konzentriert eingefärbten Masterbatchformmasse M2 erfolgt.

## Claims

1. Extrusion apparatus consisting of a main extruder (1) and a secondary extruder (2), wherein the main extruder (1) comprises a mixing section (5) downstream of the point of confluence (4) of the secondary extruder (2), **characterised in that** the two extruders are connected by means of a three-way valve (3).

2. Extrusion apparatus according to claim 1,
**characterised in that** the secondary extruder (2) is 3 to 10 times smaller in volume than the main extruder (1).

3. Extrusion apparatus according to claim 1 or 2,
**characterised in that** it is equipped with an in-line colour measuring device.

4. Extrusion apparatus according to claim 3,
**characterised in that** the in-line colour measuring device is mounted at a constriction in the flow channel (7).

5. Process for changing different coloured moulding compositions in an extrusion apparatus according to claim 1, wherein, after the extrusion of a moulding composition F1 of a first colour consisting of an untinted basic moulding composition B which has passed through the main extruder (1) and a master-batch moulding composition M1 of a concentrated colour, mixed in at position (I) of the three-way valve (3) via the secondary extruder (2), the untinted basic moulding composition B is passed successively through the main extruder (1) and the secondary extruder (2), in positions (II) and (III) of the three-way valve (3), as a result of which the master-batch moulding composition M1 is expelled from the path between the main extruder and the three-way valve (3), from the secondary extruder (2) and from the three-way valve (3), and subsequently a moulding composition F2 of a second colour is extruded, which consists of the untinted basic moulding composition B passed through the main extruder (1) and a master-batch moulding composition M2 of a concentrated colour, mixed in at position (I) of the three-way valve (3) via the secondary extruder (2).

## Revendications

1. Installation d'extrusion composée d'une extrudeuse principale (1) et d'une extrudeuse auxiliaire (2), l'extrudeuse principale (1) présentant une partie de mélange (5) en aval du point d'embouchure (4) de l'extrudeuse secondaire (2),
**caractérisée en ce que**
les deux extrudeuses sont reliées entre elles par une soupape à trois voies (3).

2. Installation d'extrusion selon la revendication 1,
**caractérisée en ce que**
l'extrudeuse auxiliaire (2) a un volume de 3 à 10 fois plus petit que l'extrudeuse principale (1).

3. Installation d'extrusion selon l'une quelconque des revendications 1 ou 2,
**caractérisée en ce qu'**
elle est équipée d'un dispositif de mesure de couleur in-line.

4. Installation d'extrusion selon la revendication 3,
**caractérisée en ce que**
le dispositif de mesure de couleur in-line est monté en un point rétréci du canal d'écoulement (7).

5. Procédé pour changer, dans une installation d'extrusion selon la revendication 1, des masses de moulage différemment colorées, selon lequel :
- après l'extrusion d'une première masse de moulage F1 colorée composée d'une masse de moulage de base B non colorée passant à travers l'extrudeuse principale (1) et d'une masse de moulage de mélange-maître M1 concentré en coloration, ajoutée par l'extrudeuse auxiliaire (2) dans la position (I) de la soupape à trois voies (3), la masse de moulage de base B non colorée, dans les positions l'une après l'autre (II) et (III) de la soupape à trois voies (3), traverse successivement l'extrudeuse principale (I) et l'extrudeuse auxiliaire (2), et ainsi la masse de moulage de mélange-maître M1 est évacuée du parcours entre l'extrudeuse principale (1) et la soupape à trois voies (3), ainsi que hors de l'extrudeuse auxiliaire (2) et hors de la soupape à trois voies (3),
- ensuite, on effectue l'extrusion d'une seconde masse de moulage colorée F2 composée d'une masse de moulage de base B non colorée sortant de l'extrudeuse principale (1), et d'une masse de moulage de mélange-maître M2 concentrée en coloration, ajoutée en mélange par l'extrudeuse auxiliaire (2), la soupape à trois voies (3) étant en position (I).
